# EUROPÄISCHE PATENTSCHRIFT

(11) **EP 0 502 466 B1**
(45) Veröffentlichungstag und Bekanntmachung des Hinweises auf die Patenterteilung: **11.10.1995**
(21) Anmeldenummer: 92103595.2
(22) Anmeldetag: 02.03.1992
(51) Int. Cl.: C01B 15/013

(54) **Verfahren zur Reinigung von Wasserstoffperoxyd für die Mikroelektronik**
Process for the purification of hydrogen peroxide for microelectronics
Procédé de purification de péroxyde pour la microélectronique

(30) Priorität: 07.03.1991 DE 4107244
(43) Veröffentlichungstag der Anmeldung: 09.09.1992
(73) Patentinhaber: Solvay Interox GmbH, D-30625 Hannover (DE)
(72) Erfinder: Honig, Helmut, W-8191 Gelting (DE); Geigel, Siegfried, W-8190 Wolfratshausen (DE)
(74) Vertreter: Lauer, Dieter, Dr.

(56) Entgegenhaltungen:
- DE-A- 3 822 348
- FR-A- 2 624 500
- GB-A- 1 197 655
- US-A- 3 012 860
- US-A- 3 297 404

## Beschreibung

Die Erfindung bezieht sich auf ein Verfahren zur weiteren Aufreinigung von Wasserstoffperoxid, welches nur geringe Mengen gelöste anorganische bzw. organische Verunreinigungen enhält, wodurch hochgereinigtes Wasserstoffperoxid bereitgestellt wird, welches sich für die Verwendung in Bereichen der Mikroelektronik mit sehr hohen Reinheitsanforderungen eignet.

Die Herstellung von zunehmend höher integrierten Schaltkreisen für die Mikroelektronik erfordert die Bereitstellung von entsprechend leistungsfähigen Chips. Begnügte man sich vor einigen Jahren noch mit Speicherkapazitäten von 256 k, so hat heute der 1 Megabit-Chip längst seinen Platz in integrierten Schaltkreisen gefunden und auch die Herstellung von Mikrochips mit einer Speicherkapazität von 4 Megabit wurde bereits aufgenommen. Die raschen Fortschritte in der Mikroelektronik, insbesondere auch mit dem Ziel der Herstellung von 16 und 64 Megabit-Chips, machen es notwendig, daß nicht nur die entsprechenden hochreinen Silicium-Wafer mit Verunreinigungen von weniger als 1 ppb (1 Teil pro Milliarde Teile Silicium) zur Verfügung stehen, sondern daß auch die zum Aufbau dieser höchst integrierten Chips notwendigen Chemikalien die sehr hohen Reinheitsanforderungen erfüllen. Toleriert die Herstellung von 1 Megabit-Chips noch eine Chemikalien-Qualität mit Verunreinigungen etwa im niederen ppm-Bereich (1 Teil pro Millionen Teile), so erfordert die Herstellung von 4- bzw. 16-Megabit-Chips Chemikalien-Qualitäten mit maximalen Verunreinigungen im Bereich von kleiner 10 ppb.

Eine der Schlüsselchemikalien für die Chipherstellung, die diese sehr hohen Reinheitsanforderungen erfüllen müssen, ist das Wasserstoffperoxid. Da Wasserstoffperoxid jedoch fast ausschließlich nach dem Anthrachinonverfahren hergestellt und gewöhnlich durch Rektifikation in Kolonnen aus Aluminium oder Edelstahl gereinigt und konzentriert wird, weist es die geforderte Reinheit noch nicht auf. Durch den Kontakt mit den metallischen Anlageteilen ist das Destillat besonders mit Aluminium, aber auch anderen Metallen verunreinigt. Daneben enthält derart hergestelltes und gereinigtes Wasserstoffperoxid prozeßbedingt Reste von organischen Kohlenstoffverbindungen ("organisches C") wie Lösungsmittel (Alkohole, Ketone, aliphatische Kohlenwasserstoffe, Säuren) und von Anthrachinonabkömmlingen. Das Wasserstoffperoxid muß daher für die Verwendung in der Mikroelektronik einer wirksamen Nachbehandlung zur Verminderung des Kationen-, des Anionen- sowie des Kohlenstoffgehaltes bis zum erforderlichen Reinheitsgrad unterworfen werden.

Durch die bekannte alleinige Reinigung von Wasserstoffperoxidlösungen durch Destillation wird die erforderliche Reinheit des Wasserstoffperoxid in bezug auf metallische Verunreinigungen und Kohlenstoff jedoch nicht erreicht. Beispielsweise scheitert die Beseitigung von organischem Kohlenstoff aus Wasserstoffperoxid durch Destillation daran, daß das nach dem Anthrachinonverfahren hergestellte Wasserstoffperoxid leichtflüchtige oder wasserdampfflüchtige organische Kohlenstoffverbindungen enthält. Der Gehalt an z.B. gelöstem organischen Kohlenstoff im Wasserstoffperoxid kann dabei durchaus noch bei Werten bis zu 150 mg/l liegen. Metallionen- und Kohlenstoff-Verunreinigungen im Wasserstoffperoxid wirken sich aber besonders störend bei der Herstellung von Mikrochips aus, wobei sich diese Verunreinigungen um so kritischer auswirken, je höher integriert die herzustellenden Chips sein sollen. Es hat daher im Stand der Technik nicht an Versuchen gefehlt, die Verunreinigungen durch Nachbehandlung mit Kationen- und/oder Anionenaustauschern aus dem Wasserstoffperoxid zu entfernen.

Als ionenaustauschende Materialien werden hierfür im Stand der Technik zur Entfernung von Kationen kernsulfonierte aromatische Kohlenwasserstoff-Kationenaustauscherharze und zur Entfernung von Anionen tertiäre Amino- bzw. quartäre Ammoniumgruppen oder Pyridinringe enthaltende aromatische Kohlenwasserstoff-Anionenaustauscherharze vorgeschlagen. Durch die in diesen Ionenaustauscherharzen enthaltenen funktionellen Gruppen sind die Ionenaustauscherharze vielfach so oxidationsempfindlich, daß bei der Reinigung von Wasserstoffperoxid mit diesen Ionenaustauscherharzen bei relativ niedrigen Temperaturen von etwa 0 °C und mit besonderen Vorrichtsmaßnahmen gearbeitet werden muß.

Die hohe Oxidationsempfindlichkeit der Ionenaustauscherharze ist darauf zurückzuführen, daß Wasserstoffperoxid in Gegenwart von Schwermetallen wie z.B. Fe oder Cu etc. gefährliche Hydroxylradikale bilden kann, die das Kohlenstoffgerüst des Ionenaustauschers oxidativ angreifen und mit diesem leichtzersetzliche Epoxide bzw. Hydroperoxide bilden können. Die gebildeten Epoxide bzw. Hydroperoxide können sich nicht nur explosionsartig, sondern unter Umständen sogar detonationsartig zersetzen. Der Einsatz von Kationen- bzw. Anionenaustauschern zur Reinigung von Wasserstoffperoxid ist somit in sicherheitstechnischer Hinsicht bedenklich und bedarf einer besonderen Sorgfalt, da es zu gefährlichen Zersetzungen von Wasserstoffperoxid im Ionenaustauscher kommen kann.

Es bestand daher die Aufgabe ein Verfahren zur weiteren Aufreinigung von destillativ vorgereinigtem Wasserstoffperoxid für die Verwendung in der Mikroelektronik zur Verfügung zu stellen, welches die Nachteile des Standes der Technik nicht aufweist und mit dessen Hilfe es möglich ist, in einfacher und gefahrloser Weise ein hochreines, kohlenstoffarmes Wasserstoffperoxid herzustellen, das den Anforderungen für die Verwendung zur Herstellung von Chips mit Speicherkapazitäten von 4 und von 16 Megabit genügt.

Die Aufgabe wird gelöst durch das im Anspruch 1 angegebene erfindungsmäße Verfahren. Bevorzugte Ausgestaltungen dieses Verfahrens sind in den weiteren Unteransprüchen angegeben.

Gemäß dem Verfahren der Erfindung werden destillativ vorgereinigte Wasserstoffperoxid-Lösungen, die nur geringe Mengen gelöster anorganischer und/oder organischer Verunreinigungen enthalten, für die Verwendung in der Mikroelektronik derart weiter aufgereinigt, daß man das destillativ vorgereinigte Wasserstoffperoxid, dem eine geringe Menge eines chelatisierenden Mittels zugesetzt ist, mit einem nicht ionenaustauschenden polymeren Adsorptionsmittel in Kontakt bringt.

Das im erfindungsgemäßen Verfahren eingesetzte, destillativ vorgereinigte Wasserstoffperoxid, welches insbesondere aus einem Verfahren zur Herstellung von Wasserstoffperoxid nach dem Anthrachinon-Prozeß entstammen kann und eine H₂O₂-Konzentration von etwa 30 bis 50 Gew.-%, insbesondere von etwa 30 bis 35 Gew.-% aufweist, enthält nur noch geringe Mengen von ionischen anorganischen Verunreinigunen wie Metallkationen (beispielsweise Al, Fe, Zn, etc.) und Anionen (NO₃⁻, PO₄²⁻ etc.) einerseits und von organischen Kohlenstoffverunreinigungen (beispielsweise herstellungsbedingte Reste von Lösungsmittel sowie Derivate von Anthrachinonen) andererseits. Im erfindungsgemäßen Verfahren werden also Wasserstoffperoxid-Lösungen weiter aufgereinigt, in denen der Gehalt an ionischen und organischen Verunreinigungen durch technisch unproblematische, bequem durchführbare und auch für die Gewinnung größerer vorgereinigter Wasserstoffperoxidmengen geeignete Destillation bereits so weitgehend vermindert wurden, daß bei der anschließenden erfindungsgemäßen adsorptiven Nachreinigung die Menge des einzusetzenden Adsorbens in vorteilhafter Weise niedrig gehalten werden kann. Der individuelle Gehalt an Metallkationen im vorgereinigten Wasserstoffperoxid liegt hierbei bereits im Bereich von unter 10 ppb, insbesondere sogar unter 5 ppb, und der Gesamtgehalt an Anionen im Bereich unter 300 ppb. Der Gehalt an organischen Kohlenstoffverunreinigunen beträgt insgesamt maximal etwa 20 ppm (20 mg/l), insbesondere aber etwa nur 10 bis 15 ppm (10 bis 15 mg/l). Angesichts dieser bereits sehr niedrigen Gehalte an Verunreinigungen im eingesetzten Wasserstoffperoxid überrascht es um so mehr, daß durch das einfache Reinigungsverfahren der Erfindung nicht nur der Anteil an organischen Kohlenstoffverunreinigungen drastisch vermindert werden kann, sondern darüber hinaus auch der Gehalt an den sogenannten Schlüsselelementen wie Na, Mg, Al, Ca, Fe, Zn und K im Wasserstoffperoxid deutlich noch weitergesenkt werden kann.

Die destillative Reinigung von wäßrigen Wassertoffperoxidlösungen, insbesondere von solchen welche nach dem Anthrachinon-Prozeß hergestellt wurden, wird im Stand der Technik im allgemeinen durch Destillation in Aluminium- oder Edelstahlkolonnen durchgeführt, wobei das Wasserstoffperoxid auf Konzentrationen von beispielsweise etwa 70 Gew.-% H₂O₂ eingestellt wird. Derartiges handelsübliches Wasserstoffperoxid könnte auch bereits nach dem erfindungsgemäßen Verfahren behandelt und weiter aufgereinigt werden. Da jedoch diese Wasserstoffperoxid-Qualität, die auch als sogenanntes "Einfachdestillat" bezeichnet wird, noch relativ große Mengen an ionischen anorganischen und an organischen Verunreinigungen enthält, unterwirft man nach einer zweckmäßigen Ausgestaltung der Erfindung das Einfachdestillat nach Verdünnung mit entmineralisiertem Wasser (insbesondere auf H₂O₂-Konzentrationen von etwa 56 Gew.-%) einer weiteren Destillation in einer Glaskolonne. Man erhält so als Kopfprodukt ("Zweifachdestillat") ein insbesondere etwa 30 bis 35 Gew.-%iges Wasserstoffperoxid, das nach Zusatz eines chelatisierenden Mittels dann zur weiteren erfindungsgemäßen Reinigung mit dem nicht ionenaustauschenden polymeren Adsorptionsmittel in Kontakt gebracht werden kann.

In einer sehr vorteilhaften Ausgestaltung der Erfindung wird aber noch nicht das vorstehende Zweifachdestillat eingesetzt, sondern ein sogenanntes "Dreifachdestillat". Dieses Dreifachdestillat wird erhalten, indem man zunächst aus der vorstehenden zweiten Destillation das mit 85 Gew.-% H₂O₂-Gehalt anfallende Bodenprodukt, welches beispielsweise organische Verunreinigungen nur noch in einer Menge von etwa 20 mg/l enhält, entnimmt und mit entmineralisiertem Wasser auf insbesondere etwa 56 Gew.-% verdünnt. Dieses verdünnte Wasserstoffperoxid-Bodenprodukt wird dann einer nochmaligen Destillation in einer Glaskolonne unterworfen, wobei das Dreifachdestillat als Kopfprodukt mit einer H₂O₂-Konzentration von ebenfalls insbesondere etwa 30 bis 35 Gew.-% anfällt. Dieses Dreifachdestillat enthält beispielsweise organische Verunreinigungen nur noch in einer Menge von etwa 10 bis 15 mg/l, wobei dieser sehr geringe Gehalt von organischen Verunreinigungen durch das erfindungsgemäße Verfahren sehr effizient weit unter einen Gehalt von 10 ppm, insbesondere unter 5 ppm, abgesenkt werden kann.

In einer sehr vorteilhaften Variante der vorstehenden Destillationen zur Gewinnung von Zweifach- bzw. Dreifachdestillat werden Glaskolonnen aus Borsilikatglas verwendet, wobei sämtliche Leitungen und Verbindungen der Destillationsanlage, die mit Wasserstoffperoxid in Kontakt kommen können, aus Polyethylen oder Polyvinylidenfluorid gebildet sind. Durch diese vorteilhafte Variante werden bereits besonders metallkationenarme Wasserstoffperoxid-Ausgangslösungen für das erfindungsgemäße Verfahren bereitgestellt und darüber hinaus besonders günstige Reinigungseffekte erzielt.

Gemäß dem Verfahren der Erfindung wird dem zu reinigenden Wasserstoffperoxid vor der Behandlung mit dem nicht ionenaustauschenden polymeren Adsorptionsmittel eine geringe Menge eines chelatisierenden Mittels zugesetzt. Hierfür geeignet sind an sich alle nach dem Stand der Technik bekannten Chelatisierungsmittel, die ein hohes Chelatisierungsvermögen für die zu entfernenden Kationen aufweisen. Als besonders geeignet erweisen sich chelatisierende Mittel, die Carboxylgruppen oder Phosphonsäuregruppen aufweisen. Bevorzugt sind Phosphonsäuren vom Typ der Ethylenaminmethylenphosphonsäuren. Es versteht sich hierbei von selbst, daß die chelatisierenden Mittel hochrein sein und in Säureform vorliegen müssen. Beispiele für solche chelatisierenden Mittel, die im erfindungsgemäßen Verfahren zur Reinigung von Wasserstoffperoxid eingesetzt werden können, sind Hydroxyethylethylendiamintriessigsäure, Nitrilotriessigsäure, Ethylendiamintetraessigsäure, Diethylentriaminpentaessigsäure, Triethylentetraminhexaessigsäure, Nitrilotri-(methylenphosphonsäure), 1-Hydroxyethyliden-1,1-diphosphonsäure, Ethylendiamintetra-(methylenphosphonsäure), Diethylentriaminpenta-(methylenphosphonsäure), Dihydroxyethylglycin und Hydroxyethylaminodiessigsäure. Zur Durchführung des erfindungsgemäßen Verfahrens müssen dem zu reinigenden Wasserstoffperoxid nur geringe Mengen der vorstehenden chelatisierenden Mittel zugesetzt werden. Da die Menge an nach einer destillativen Vorreinigung noch im Wasserstoffperoxid verbleibenden Verunreinigungen sich nur in einer Größenordnung von ppb bewegt, genügen bereits wenige Milligramm des chelatisierenden Mittels pro 1 Liter des zu reinigenden Wasserstoffperoxids. Eine bevorzugte Ausführungsform des erfindungsgemäßen Verfahrens zeichnet sich daher dadurch aus, daß das chelatisierende Mittel dem Wasserstoffperoxid in einer Menge von 5 bis 20 mg/l zugesetzt ist.

So reichen Mengen an chelatisierenden Mitteln aus, welche mindestens der zur Chelatisierung der noch vorhandenen anorganischen Verunreinigungen stöchiometrisch notwendigen Menge und höchstens einem Überschuß von 50 bis 100 % dieser Menge entspricht.

Das mit dem chelatisierenden Mittel versetzte Wasserstoffperoxid wird nach dem Verfahren der Erfindung anschließend mit einem nicht ionenaustauschenden polymeren Adsorptionsmittel in Kontakt gebracht. Hierzu wird das mit dem Chelatisierungsmittel versehene Wasserstoffperoxid z.B. in einem Bett-Verfahren mit dem Adsorptionsmittel gemischt bzw. bevorzugt über eine mit dem Adsorptionsmittel gefüllte Säule gegeben. Die Fließgeschwindigkeit des Wasserstoffperoxids durch die mit Adsorptionsmittel gefüllte Säule ist dabei so einzustellen, daß der Gehalt an Kohlenstoff im Eluat die maximal tolerierbare Menge nicht überschreitet. Zweckmäßigerweise werden hierfür Fließgeschwindigkeiten zwischen 1 und 15 l/h bei einem Gesamtvolumen von 1 l Adsorptionsmittel eingestellt. Das aus der Adsorptionssäule ablaufende gereinigte Wasserstoffperoxid wird in einem geeigneten Behälter aufgefangen. Wird die Adsorption in einem Bett-Verfahren durchgeführt, so wird das Wasserstoffperoxid nach der Behandlung mit dem nicht ionenaustauschenden polymeren Adsorptionsmittel durch Filtration vom Adsorptionsmittel befreit und das gereinigte Wasserstoffperoxid ebenfalls in einem geeigneten Behälter gesammelt. Wichtig für den Erfolg des erfindungsgemäßen Verfahrens ist, daß alle während der Reinigung eingesetzten Geräte und Behälter aus geeigneten Materialien bestehen, damit das hochreine Wasserstoffperoxid nicht durch z.B. Metallionen etc. aus den Behältern und Rohrleitungen nachträglich wieder verunreinigt wird. Als geeignete Materialien erwiesen sich insbesondere Borsilikatglas, Polytetrafluoroethylen (PTFE), Polyvinylidenfluorid (PVDF) und Hochdruckpolyethylen (HDPE). Das Verfahren der Erfindung zeichnet sich somit durch große Einfachheit aus und kann darüber hinaus auch bei Raumtemperatur erfolgen.

Als nicht ionenaustauschende Adsorbenzien im Sinne der Erfindung eignen sich insbesondere mit Divinylbenzol quervernetzte polymere Styrolharze, die frei von auswaschbaren Bestandteilen wie z.B. Monomeren und Polymerisationshilfsmitteln sind. Bei diesen Adsorbenzien handelt es sich vorzugsweise um Styrolpolymerisate, die durch Suspensionspolymerisation von Styrol mit einem Anteil von etwa 5 bis 15 Gew.-%, insbesondere etwa 8 bis 12 Gew.-% Divinylbenzol, erhalten wurden. Diese Adsorbenzien besitzen keine ionischen funktionellen Gruppen und sind somit vollständig nichtionische hydrophobe Polymere, deren adsorptive Eigenschaften ausschließlich auf der makroretikularen Struktur, dem weiten Bereich der Porengrößen, der ungewöhnlich hohen Oberfläche und der aromatischen Natur dieser Oberfläche beruhen. Diese Styroldivinyl-copolymeradsorbenzien unterscheiden sich damit in dieser Hinsicht eindeutig von Kationen- und Anionenaustauscherharzen, die aufgrund der darin enthaltenen funktionellen Gruppen sehr oxidationsempfindlich sind und daher bei der Anwendung zur Reinigung von Wasserstoffperoxid mit einer besonderen Sorgfalt (beispielsweise Arbeiten bei 0 °C) gehandhabt werden müssen. Demgegenüber sind die erfindungsgemäß eingesetzten Adsorbenzien oxidationsstabil und können in bequemer Weise auch bei gewöhnlichen Umgebungstemperaturen, beispielsweise bei etwa 20 bis 25 °C, eingesetzt werden. Die erfindungsgemäß verwendeten Styroldivinylbenzolcopolymeradsorbenzien werden beispielsweise als weiße unlösliche Perlen mit folgenden typischen Eigenschaften (bestimmt für das getrocknete Polymerharz) im erfindungsgemäßen Verfahren verwendet: Porenvolumen etwa 0,5 ml/ml Matrix; Oberfläche etwa 800 m²/g; durchschnittliches Porenvolumen 400 bis 600 nm. Weitere typische Eigenschaften der verwendeten Styroldivinylbenzolcopolymeradsorbenzien sind der durchschnittliche Partikeldurchmesser von etwa 0,35 bis 0,45 mm und die Dichte von etwa 1 g/ml. Diese hydrophen Adsorptionsmittel besitzen zwar eine hohe Affinität zu hydrophoben organischen Stoffen, die Affinität zu hydrophilen Stoffen wie z.B. Wasser oder Wasserstoffperoxid ist dagegen gering.

Vor der Verwendung der Styroldivinylbenzolcopolymeradsorbenzien empfielt es sich als zweckmäßig, das Adsorbens mit einem niederen Alkohol, vorzugsweise mit reinem Methanol, von herstellungsbedingten Verunreinigungen (wie restliche Monomere oder Polymerisationshilfsmittel) freizuwaschen, da derartige Verunreinigungen Wasserstoffperoxid zersetzen können und daher unerwünscht sind. Selbstverständlich läßt sich das Adsorbens nach der Verwendung im erfindungsgmäßen Verfahren vom Sorbat durch Regenerieren in an sich üblicher Weise befreien und für eine erneute Verwendung vorbereiten.

Durch die Erfindung wird ein besonders einfaches und vorteilhaftes Verfahren zur Reinigung von Wasserstoffperoxid für Anwendungen in der Mikroelektronik bereitgestellt. Das erfindungsgmäße Verfahren zeichnet sich hierbei insbesondere dadurch aus, daß es nicht nur gelingt, bereits sehr niedrige Gehalte an Kohlenstoff (organische Verunreinigungen) im Wasserstoffperoxid sehr effektiv weiter zu senken, sondern daß darüber hinaus auch in unerwarteter und überraschender Weise der Gehalt an Metallkationen, insbesondere der Gehalt an Schlüsselementen wie Natrium, Magnesium, Aluminium, Calcium, Eisen, Zink und Kalium, noch weiter gesenkt werden kann. Darüber hinaus weisen erfindungsgemäß gereinigte Wasserstoffperoxid-Lösungen deutlich erhöhte Stabilität auf. Die erfindungsgemäß gereinigten Wasserstoffperoxid-Lösungen erfüllen darüber hinaus die hohen Anforderungen an die Reinheit, wie sie zur Herstellung von 16 Megabit-Chips einzuhalten sind.

Die nachfolgenden Beispiele sollen die Erfindung näher erläutern, ohne sie jedoch in ihrem Umfange zu beschränken.

### Beispiele

Zur Demonstration der Effizienz des erfindungsgemäßen Verfahrens wurden in den nachfolgenden Beispielen folgende wässrige Wasserstoffperoxid-Lösungen und Adsorbenzien eingesetzt sowie folgende Analysenmethoden verwendet.

### Wasserstoffperoxid

Als Wasserstoffperoxid-Ausgangslösungen wurde sogenanntes "Dreifachdestillat" (mit etwa 35 Gew.-% H₂O₂-Gehalt) aus Destillationen in Borsilikatglaskolonnen eingesetzt. Diese Ausgangslösungen wurden hergestellt, indem wässrige Wasserstoffperoxid-Lösungen aus dem Anthrachinon-Verfahren zunächst durch Destillation in einer Aluminiumkolonne auf einen H₂O₂-Gehalt von etwa 70 Gew.-% konzentriert wurden. Die erhaltenen etwa 70 Gew.-%igen Wasserstoffperoxid-Lösungen wurden dann mit entmineralisiertem Wasser auf eine Konzentration von etwa 56 Gew.-% H₂O₂ verdünnt und in einer Borsilikatglaskolonne erneut destilliert, wobei man etwa 35 Gew.-%iges H₂O₂-Kopfprodukt ("Zweifachdestillat") und ein 85 Gew.-%iges H₂O₂-Bodenprodukt erhielt. Das H₂O₂-Bodenprodukt, welches noch einen C-Gehalt von etwa 20 mg/l aufwies, wurde einer nochmaligen Destillation in einer Borsilikatglaskolonne unterworfen. Als Kopfprodukt erhielt man Wasserstoffperoxid-Lösungen mit etwa 35 Gew.-% H₂O₂-Gehalt ("Dreifachdestillat") und einem C-Gehalt von etwa 12 mg/l, welche als Ausgangslösungen für das erfindungsgemäße Reinigungsverfahren eingesetzt wurden.

### Adsorbenzien

Als Adsorbenzien wurden nicht ionenaustauschende polymere Styroldivinylbenzolcopolymerisate mit einem Divinylbenzolgehalt von 8 bis 10 % und folgenden weiteren Eigenschaften eingesetzt:
- Durchschnittlicher Teilchendurchmesser 0,35 bis 0,45 mm
- Naßdichte 1,03 bis 1,04 g/ml Porenvolumen 0,50 ml/ml des getrockneten Copolymerisates
- Oberfläche etwa 800 m²/g (getrocknetes Copolymerisat)
- Durchschnittlicher Porendurchmesser 400 bis 600 nm (getrocknetes Copolymeres)
Insbesondere wurden kommerziell erhältliche Styroldivinylbenzolcopolymerisate verwendet, welche von der Firma Röhm und Haas unter dem Warenzeichen Amberlite^{R} mit den Typenbezeichnungen XAD (vorzugsweise XAD-2 bzw. XAD-4) vertrieben werden.

Vor der Verwendung im erfindungsgemäßen Verfahren wurden die Styroldivinylbenzolcopolymerisate noch mit reinem Methanol von auswaschbaren Bestandteilen wie restlichen Monomeranteilen und Polymerisationshilfsmitteln etc. freigewaschen. Anschließend wurde mit entmineralisiertem Wasser bis zur Kohlenstofffreiheit (d.h. bis zur Freiheit von organischen Bestandteilen und auch von Methanol) nachgewaschen. Das Adsorbens war danach für die Verwendung im erfindungsgemäßen Verfahren vorbereitet.

### Analysen

Der jeweilige Gehalt an Metallkationen in den Wasserstoffperoxid-Lösungen wurde durch Massenspektrometrie mit induktiv gekoppeltem Plasma (IPC-MS) bzw. der jeweilige Gehalt an organischem Kohlenstoff mit IR-Spektroskopie ermittelt.

### Beispiel 1

1 l des wie oben beschrieben vorbereiteten Styroldivinylbenzolcopolimerisates wurde in eine zylindrische Kolonne aus Polyethylen mit einer Höhe von 250 mm und einem Durchmesser von 100 mm gefüllt. Die Kolonne wurde danach mit 600 ml 35 Gew.-%igem Wasserstoffperoxid (Dreifachdestillat), das zuvor mit 10 mg/l Ethylendiaminotetramethylenphosphonsäure (EDTMP) versetzt wurde, beaufschlagt. Die Durchflußgeschwindigkeit der Wasserstoffperoxid-Lösung wurde auf 1 ml pro Minute und pro 1 ml Copolymerisat eingestellt. Während des Durchflusses der Wasserstoffperoxid-Lösung erwärmte sich das Copolymerisat in der Kolonne nicht; eine exotherme Reaktion zwischen Harz und Wasserstoffperoxid trat nicht ein. Das aus der Kolonne abfließende, gereinigte Wasserstoffperoxid wurde in hochreinen Behältern aus Hochdruckpolyethylen bzw. Polyvinylidenfluorid aufgefangen und auf den Gehalt an Metallkationen durch Massenspektrometrie bzw. an organischem Kohlenstoff durch IR-Spektroskopie analysiert. Die Ergebnisse der Analyse sind in der Tabelle 1 wiedergegeben.

Zusätzlich zu der vorstehenden Analyse des Gehaltes an Metallkationen und organischem Kohlenstoff wurde die Stabilität der Wasserstoffperoxid-Lösungen vor (Dreifachdestillat) und nach der Durchführung des erfindungsgemäßen Reinigungsverfahrens als Stabilitätsverlust (ml O₂/min) bestimmt. Der Stabilitätsverlust gibt hierbei die Menge des entwickelten Sauerstoffs in ml für eine 25 ml-Probe bei 100 °C an. Das Ergebnis ist ebenfalls in Tabelle 1 angegeben.

**Tabelle 1**

| | Wasserstoffperoxid-Ausgangslösung (Dreifachdestillat) | Wasserstoffperoxid nach erfindungsgemäßer Reinigung |
|---|---|---|
| a) Verunreinigungen | | |
| a1)Kationen in ppb | | |
| Li | 3,8 | 1,5 |
| B | 1,5 | 1,2 |
| Na | 3,2 | 2,2 |
| Mg | 2,0 | 0,5 |
| Al | 1,5 | 0,7 |
| Ca | 3,2 | 0,9 |
| Cr | 0,8 | 0,9 |
| Fe | 1,2 | 1,2 |
| Mn | 0,4 | 0,4 |
| Ni | 3,7 | 2,5 |
| Cu | 0,7 | 0,7 |
| Zn | 6,4 | 0,8 |
| Pb | 0,8 | 0,3 |
| K | 3,0 | 2,0 |
| a2)organisches C in ppm | 12 | 7 |
| b)Stabilitätsverlust in ml Sauerstoff pro Minute | 0,27 | 0,20 |

### Beispiele 2 und 3

Analog Beispiel 1 wurden weitere Reinigungsversuche durchgeführt, wobei die eingesetzten 35,6 Gew.-%igen Wasserstoffperoxid-Ausgangslösungen (Dreifachdestillate) jedoch Kohlenstoffgehalte von 13 mg pro 1 l aufwiesen. Nach Zugabe von 15 mg/l Diethylentriaminopentamethylenphosphonsäure als chelatisierendes Mittel (DTPMP) ließ man die Wasserstoffperoxid-Ausgangslösungen mit einer Durchflußgeschwindigkeit von etwa 17 ml pro Minute über 800 g vorbehandeltes Styroldivinylbenzolcopolymerisat in einer Kunststoffsäule (HDPE, 10 cm Durchmesser, Füllhöhe 15 cm) laufen. Für die gereinigten Wasserstoffperoxid-Lösungen wurden etwa dem Beispiel 1 entsprechende Metallkationengehalte gefunden. Die weiteren Ergebnisse, insbesondere die Gehalte an organischem Kohlenstoff und die Zersetzungsverluste, sind in der nachfolgenden Tabelle 2 zusammengestellt.

**Tabelle 2**

| | Wasserstoffperoxid nach erfindungsgemäßer Reinigung | | | |
|---|---|---|---|---|
| | Menge (l) | Wasserstoffperoxid-Gehalt (Gew.-%) | Kohlenstoff Gehalt (ppm) | Zersetzungsverlust (ml Sauerstoff pro Minute) |
| Beispiel 2 | 27 | 34,2 | 4 | 0,13 |
| Beispiel 3 | 27 | 34,9 | 5 | 0,15 |

## Patentansprüche

1. Verfahren zur weiteren Aufreinigung von nur geringe Mengen gelöster anorganischer und/oder organischer Verunreinigungen enthaltendem Wasserstoffperoxid für die Verwendung in der Halbleitertechnik, dadurch gekennzeichnet, daß man destillativ vorgereinigtes Wasserstoffperoxid, dem eine geringe Menge eines chelatisierenden Mittels zugesetzt ist, mit einem nicht ionenaustauschenden polymeren Adsorptionsmittel in Kontakt bringt.

2. Verfahren nach Anspruch 1, dadurch gekennzeichnet, daß man Wasserstoffperoxid einsetzt, welches durch Destillation über eine Borsilikatglaskolonne vorgereinigt wurde.

3. Verfahren nach Anspruch 1, dadurch gekennzeichnet, daß dem destillativ vorgereinigten Wasserstoffperoxid eine solche Menge an chelatisierendem Mittel zugesetzt wird, welche mindestens der zur Chelatisierung der in dem destillativ vorgereinigten Wasserstoffperoxid noch verbliebenen anorganischen Verunreinigungen stöchiometrisch notwendigen Menge und höchstens einem 100-%igem Überschuß dieser Menge entspricht.

4. Verfahren nach Anspruch 3, dadurch gekennzeichnet, daß das chelatisierende Mittel dem Wasserstoffperoxid in einer Menge von 5 bis 20 mg/l zugesetzt ist.

5. Verfahren nach Anspruch 1, dadurch gekennzeichnet, daß man als polymeres Adsorptionsmittel Copolymerisate auf Basis von Styrol- und Divinylbenzol einsetzt.

6. Verfahren nach Anspruch 5, dadurch gekennzeichnet, daß man Copolymerisate auf Basis von 88 bis 92 Gew.-% Styrol und 8 bis 12 Gew.-% Divinylbenzol einsetzt.

7. Verfahren nach einem der vorhergehenden Ansprüche, dadurch gekennzeichnet, daß man das Wasserstoffperoxid über eine Säule mit einem Bett aus polymeren Adsorptionsmittel leitet.

## Claims

1. Process for the purification of hydrogen peroxide containing only small quantities of dissolved inorganic and/or organic contaminants, for use in the semi-conductor industry, characterised in that hydrogen peroxide which has been purified previously by distillation and to which a small amount of a chelating agent has been added is brought into contact with a non-ion exchanging polymer adsorption agent.

2. Process according to claim 1 characterised in that hydrogen peroxide is used which has been purified previously by distillation in a boron silicate glass column.

3. Process accoring to claim 1 characterised in that an amount of chelating agent corresponding to at least the stoichiometric quantity necessary for cheating the inorganic contaminants remaining in the hydrogen peroxide previously purified by distillation and to maximum a 100% excess of this quantity is added to the hydrogen peroxide previously purified by distillation.

4. Process according to claim 3 characterised in that the chelating agent is added to the hydrogen peroxide in a quantity of 5 to 20 mg/1.

5. Process according to claim 1 characterised in that copolymers based on styrene and divinyl benzene are added as polymer adsorption agents.

6. Process according to claim 5 characterised in that copolymers based on 88 to 92% by wt. styrene and 8 to 12% by wt. divinyl benzene are used.

7. Process according to one of the previous claims characterised in that the hydrogen peroxide is passed over a column with a bed of polymer adsorption agent.

## Revendications

1. Procédé pour la purification supplémentaire du peroxyde d'hydrogène - ce peroxyde d'hydrogène contenant des impuretés anorganiques et/ou organiques dissoutes seulement en quantités faibles - pour usage dans la technique des semi-conducteurs, ce procédé est caractérisé en ce crue du peroxyde d'hydrogène - purifié au préalable par distillation et auquel on a ajouté une petite quantité d'un agent chélatisant - est mis en présence avec un adsorbant polymère sans échange d'ions.

2. Procédé selon la revendication 1, caractérisé par l'emploi de peroxyde d'hydrogène, purifié au préalable par distillation dans une colonne de verre contenant du silicate de bore.

3. Procédé selon la revendication 1, caractérisé par l'addition au peroxyde d'hydrogène - purifié au préalable par distillation - d'une telle quantité d'agent chélatisant qu'elle corresponde au minimum à la quantité stoechiométriquement nécessaire à la chélatisation des impuretés résiduelles anorganiques contenues dans le peroxyde d'hydrogène - purifé au préalable par distillation - et au maximum à un surplus de 100 % de cette quantité.

4. Procédé selon la revendication 3, caractérisé en ce que l'agent chélatisant est ajouté au peroxyde d'hydrogène dans une quantité de 5 à 20 mg par litre de peroxyde d'hydrogène.

5. Procédé selon la revendication 1, caractérisé par l'emploi de copolymères à base de styrol et de divinylbenzol en tant qu'adsorbant polymère.

6. Procédé selon la revendication 5, caractérisé par l'emploi de copolymères sur la base de 88 à 92 % en poids de styrol et 8 à 12 % en poids de divinylbenzol.

7. Procédé selon l'une des revendications précédentes caractérisé par le passage du peroxyde d'hydrogène au travers d'une colonne contenant un lit d'adsorbants polymères.
